# EUROPÄISCHE PATENTSCHRIFT

(11) **EP 1 983 014 B1**
(45) Veröffentlichungstag und Bekanntmachung des Hinweises auf die Patenterteilung: **28.12.2011**
(21) Anmeldenummer: 08005326.7
(22) Anmeldetag: 20.03.2008
(51) Int. Cl.: C08G 59/50, C09J 163/00, E04F 15/02

(54) **Parkettfugenkittsystem und Verfahren zur Herstellung eines Parkettfugenkitts**
Parquet joint kit system and method for manufacturing a parquet joint kit system
Système en kit de joints de parquet et procédé de fabrication d'un kit de joints de parquet

(30) Priorität: 17.04.2007 DE 102007018414
(43) Veröffentlichungstag der Anmeldung: 22.10.2008
(73) Patentinhaber: Wakol GmbH, 66954 Pirmasens (DE)
(72) Erfinder: Hillert, Götz, Dr., 66954 Pirmasens (DE); Schäfer, Martin, Dr., 76829 Godramstein (DE)
(74) Vertreter: Geitz Truckenmüller Lucht

(56) Entgegenhaltungen:
- EP-A2- 0 856 619
- DE-A1- 1 921 139
- DE-A1- 2 606 138
- US-A- 3 806 483
- US-A- 5 539 025
- DATABASE WPI Week 198244 Thomson Scientific, London, GB; AN 1982-93768E XP002621181 -& JP 57 155247 A (MATSUSHITA ELECTRIC WORKS LTD) 25. September 1982 (1982-09-25)

## Beschreibung

Die Erfindung geht aus von einem Parkettfugenkittsystem und einem Verfahren zur Herstellung eines Parkettfugenkitts.

Derartige Parkettfugenkitts werden zum Auffüllen von Fugen zwischen einzelnen Parkettelementen eingesetzt.

Das Verkitten von Parkettfugen wird in der DIN-Vorschrift Nr. 18356 nicht gesondert erwähnt, jedoch wird dort auf Folgen der Kantenverleimung bei stark verklebend wirkenden Versiegelungsmaterialien verwiesen.

In der EP 0 856 619 A2 werden Reaktions-Klebstoffe wie Epoxid-, Harnstoff-Formaldehyd- oder Phenolharzklebstoffe sowie Urethan- oder Polyesterklebstoffe beziehungsweise wasserverdünnte Standard-Holzleime zur Verklebung von einzelnen Schichten bei laminierten Parkettelementen vorgeschlagen.

Darüber hinaus sind im Bereich der Holzverarbeitung Formmassen auf Epoxidharzbasis bekannt. So ist aus der JP 57 155247 A ein modifiziertes Epoxidharz-Formungsmaterial bekannt, welches aus einem bisphenol A-typ Epoxidharz mit einer phenolischen Komponente gebildet wird, wobei die phenolische Komponente und das Epoxidharz mit einem Härter, Holzmehl als Füllstoff, einem Formtrennmittel und einem Farbstoff kompoundiert werden.

In der DE 19 21 139 A1 ist zudem ein Verfahren zur Herstellung von löslichen Epoxidformstoff-Vorprodukten auf Basis von Triglycidylisocyanurat beschrieben wobei kristallines oder harzartiges Triglycidylisocyanurat mit der zur Aushärtung erforderlichen Menge an sauren oder aminischen Härtern gemischt wird und in gegenüber Epoxidgruppen nicht reaktionsfähigen Lösungsmitteln oder Lösungsmittelgemischen zur Reaktion gebracht wird. Die hierdurch erhaltenen Lösungen lassen sich, mit Füllstoffen wie Holzmehl verknetet, zu Epoxidharzformmassen verarbeiten.

Zum Schließen von Löchern und Rissen in Holzteilen ist in der DE 26 06 138 A1 die Verwendung eines konventionellen Epoxidharzsystems mit Füllung von Holzmehl feinschliff unter Zusatz von Polysulfiden offenbart. Die spannungsfreie Kunstharzplastic zur Ausbesserung zerstörten Holzes ist wie Holz durch Schleifen, Feilen, Bohren und Hobeln zu bearbeiten.

Beispiele für wässrige Zusammensetzungen, die in verschiedenen Einsatzgebieten Anwendung finden, sind in der US 5 539 025 A und der US 3 806 483 A aufgeführt.

Die US 5 539 025 A beschreibt hierbei einkomponentige, stabile, härtbare Zusammensetzungen aus Epoxidharz- und Polyamidharz-Dispersionen. Die Polyamidharz-Dispersionen sind zur Erhöhung der Lagerungsstabilität mit wasserlöslichen, dipolaren chemischen Verbindungen ausgestattet. Die Zusammensetzungen eignen sich unter anderem als Bindemittel für alle Arten an Feststoffpartikeln, einschließlich Holzmehl.

Aus der US 3 806 483 A sind lagerungsstabile wasserbasierte Zusammensetzungen bekannt, die ein Emulsionspolymerisat ein Epoxidharz und einen latenten, durch Hitze aktivierbaren Aminhärter enthalten. Verwendung finden die Zusammensetzungen als Klebstoffe, Beschichtungen und Bindemittel Holzmehl als Füllstoff kann ebenfalls enthalten sein.

Im Fachbuch für Parkett- und Bodenleger (SN-Verlag Hamburg, 2001) von K. Remmert, J. Heller, H. Spang, K. Bauer / Thomas Brehm wird hingegen ausführlich auf das Verkitten von Fugen eingegangen.

Bei Massivholz, laminiertem Parkett, Mosaikparkett und Hochkantlamellenparkett wird nach dem Mittelschliff mit einer Körnung 60 mit einer Paste, bestehend aus Holzkittlösung und dem gewonnenen Schleifstaub, verfugt.

Entgegen dem allgemeinen Trend zur Verwendung wasserbasierter lösungsmittelarmer Materialien wird bei der Fugenverkittung noch überwiegend mit Lösungsmittel enthaltendem Fugenkitt gearbeitet. Auch der auf Grund der schnelleren Verdunstung der Lösungsmittel höhere Verbrauch ändert an der Bevorzugung von lösungsmittelhaltigen Systemen gegenüber rein wässrigen Mitteln nichts. Während mit wässrigen Systemen die Bearbeitung einer Fläche von 20-25 m²/l möglich ist, kann mit lösungsmittelhaltigen Fugenkitts nur eine Fläche von 6 m² / l bearbeitet werden.

Lösungsmittelbasierte Systeme enthalten beispielsweise eine Mischung aus Nitrocellulosewolle mit leichtflüchtigen organischen Lösungsmitteln (FK ca. 8-10%), wasserbasierte Systeme enthalten als Hauptbestandteil neben Wasser ein dispergiertes Polyacrylatharz, wobei je nach Typ des Harzes verfestigend wirkende Fasern zugesetzt (FK ca. 20%) sind.

Die Konsistenz der auf diese Weise angedickten Paste muss einerseits so fließfähig sein, dass sie auch in kleinste Fugen (<0,5 mm) sicher eindringt, andererseits aber muss sie ein hinreichendes Standvermögen besitzen, um nicht in den Fugen abzusacken. Bei der Renovierung alter Böden mit Fugenbreiten von > 2mm ist daher ein zweiter Spachtelgang zur vollständigen Füllung der unzureichend gefüllten Fugen oft unvermeidlich. Auch bei Ölkunstharzlacken, die teilweise noch bei besonderen Ausführungen von Belägen, wie Fußbodenheizungen, Hochkantlamellenparkettböden oder Holzpflastern zum Einsatz kommen, ist ein nivellierender Abschluss der Fugenverkittung erforderlich, um so genannte Lackabsacker zu vermeiden und um nach dem abschließenden Schleifvorgang absolut planare Oberflächen zu erhalten.

Der für den Verarbeiter bedeutendste Vorteil von lösungsmittelbasiertem gegenüber wasserbasiertem Fugenkitt liegt in der schnelleren Durchtrocknung der Fugen und dem damit verbundenen Zeitgewinn bis zur Abschleifbarkeit der überstehenden Fugenkittmasse. Insbesondere bei unterschiedlich breiten Fugen oder dem Vorhandensein von ebenfalls zu füllenden Astlöchern kann die Trockenzeit von wasserbasiertem Fugenkitt bis zur Überschleifbarkeit extrem lange z.B. etwa 12 Stunden dauern.

Aufgabe der Erfindung ist es daher ein Fugenkittsystem bereitzustellen, das mindestens lösungsmittelreduziert, am besten aber lösungsmittelfrei ist und dessen Wartezeit bis zur Schleifbarkeit der Fugen trotz der weit überwiegend oder rein wässrigen Zusammensetzung auch bei breiten Fugen mindestens so kurz ist, wie man das von lösungsmittelhaltigen Verfugungsmitteln kennt und das überdies eine erhöhte Aufnahmefähigkeit von Schleifstaub besitzt, die ein weiteres Mittel zur Verhinderung des Absackens darstellt, weil sich so die Masse in den Fugenzwischenräumen wesentlich schneller verfestigt.

Bisherige Systeme (sowohl lösungsmittelbasierte als auch wasserbasierte) haben zum Teil auch gravierende Nachteile hinsichtlich der Beständigkeit gegen Lichteinwirkung besonders Sonneneinstrahlung. Während lösungsmittelbasierte Fugenkitte auf hellen Hölzern oft als störend empfundene dunkle Fugenlinien bilden, kommt es bei wasserbasierten Systemen bei starker Sonneneinstrahlung (Bodenfenster, Glastüren, Südlage) durch Ausbleichen zu z.T. starken Farbunterschieden gegenüber den Parkettelementen.

Es ist daher eine weitere Aufgabe der Erfindung, die Lichtempfindlichkeit von Fugenmaterial durch die Bereitstellung eines wasserbasierten Fugenkittsystems, das gegenüber den bekannten wasserbasierten Systemen eine deutliche Widerstandskraft gegen Farbveränderungen bei Lichteinwirkung aufweist, herunterzusetzen.

Zur Lösung dieser Aufgaben wird ein wasseremulgiertes Epoxydharz mit einem Amin-Härter vernetzt und ein Holzmehl zugemischt.

Während in nicht reaktiven wässrigen Dispersionen die Materialeigenschaften des ausgehärteten Produkts sich zwingend und ausschließlich aus der chemischen Struktur und Morphologie der Dispersionspartikel ergibt, kann bei sich vernetzenden Systemen die Struktur und Morphologie der Partikel über die Polyadditionsreaktion anhand der damit gemachten Erfahrungen gezielt gesteuert werden. Die gezielte Wahl des Molekulargewichtes und der Polyadditionsbedingungen erlauben es, die Viskosität der Bindemittelkomponenten während der Applikationsphase niedrig zu halten, was wiederum eine sehr gute oberflächliche Benetzung der Holzfasern ermöglicht. Gleichzeitig tritt hierdurch ein starker Hydrophobierungseffekt auf, der der Holzquellung entgegenwirkt. Die für die spätere Festigkeit des Systems erforderlichen hohen Molekulargewichte werden über die Polyadditionsreaktion der Oxirangruppen des Harzes mit den Aminogruppen des Härters aufgebaut. Es ist hier also ein Vorteil des Systems, dass die Edukte der Reaktion eine größere Hydrophilie aufweisen als die eingesetzten Produkte selbst. Der Grund hierfür ist, dass hydrophile primäre Amine zu hydrophoberen tertiären Aminen umgesetzt werden. Während der Erhärtungsreaktion nimmt die Hydrophilie also ständig ab, was dazu führt, dass das im System vorhandene Wasser mit zunehmendem Reaktionsumsatz weniger stark zurückgehalten wird und somit - im Gegensatz zu einkomponentigen Systemen viel leichter verdunsten kann. Hier ändern nämlich während des Härtungsvorganges die für die Stabilität der rein physikalisch härtenden Dispersionen erforderlichen Emulgatoren bzw. Schutzkolloide ihren hydrophilen Charakter nicht.

Das Polymergerüst, welches die erforderliche Festigkeit der Holzkittmasse bis zur sicheren Schleifbarkeit erbringen muss, entsteht hier nicht durch eine physikalische Filmbildung der Dispersion, sondern durch die chemische Vernetzung der Emulsionspartikel, d.h. der für die Schleifbarkeit erforderliche Festigkeitsaufbau wird selbst unter extrem ungünstigen Trocknungsbedingungen, wie hohe Luftfeuchtigkeit oder niedrige Temperatur, welche die Verdunstung des Wassers und damit die Trocknung praktisch vollständig verhindern, überraschend erzielt. Das Wasser bleibt nämlich in diesem Fall in getrennter Phase zwischen den durch das erzeugte Polymergerüst verfestigten Holzfasern erhalten und kann danach in für den Fall angemessener Zeit völlig verdunsten.

Dieser Mechanismus kann erfindungsgemäß durch die oben beschriebenen Epoxy-Aminsysteme erfolgen, bei denen es zu einer Quervernetzung zwischen emulgiertem Harz und emulgierten Härter-Partikeln kommt. Hierfür haben sich Polyaminaddukte als günstig erwiesen, deren NH-Äquivalentgewicht zwischen 150 und 200 g/mol NH liegen, und deren Hydrophobie so ausgeprägt ist, dass sie in Wasser nicht löslich sind. Am besten hierfür hat sich eine Dispersion eines Polyaminadduktes mit einem Festkörpergehalt von 55 Gew. % und einem NH-Äquivalentgewicht von 165 g/mol bezogen auf den Festkörperanteil (Epilink 701, Fa. Air Produkts Polymers) erwiesen.

Als Epoxydharzdispersionen haben sich Dispersionen von Festharzen als besonders brauchbar erwiesen, bei denen das Harz ein Äquivalentgewicht von >300g/mol EP (bezogen auf den Festkörper), bevorzugt 350 g/mol aufweist

### (z.B. Polypox E 2500/60W der Firma UPPC)

Das erfindungsgemäße Parkettfugenkittsystem zeichnet sich durch folgende Bestandteile aus
a) eine wässrige Epoxidharzdispersion
b) einen Amin-Härter, der bei Mischung von a) und b) ein Festkörperaddukt mit a) bildet und
c) ein Holzmehl.

### Allgemeine Beschreibung der Parkettfugenkittzusammensetzung in Gew.%:

| **Bestandteil a)** | |
|---|---|
| Epoxidharzdispersion (auf FK-Gehalt bezogen) | 5-10 %, bevorzugt 7-9 % |

| **Bestandteil b)** | |
|---|---|
| Amin-Härter (auf FK-Gehalt bezogen) | 4-7 %, bevorzugt 5-6 % |

| **Bestandteil c)** | |
|---|---|
| Holzmehl | 9-14 %, bevorzugt 10,5-12,5 % |
| **Wasser** | 60-70 %, bevorzugt 64-68 % |

| **zusätzliche Bestandteile** | |
|---|---|
| Verdickungsmittel | 0,1-1 %, bevorzugt 0,4-0,8 % |
| wasserlösliche organische Lösungsmittel | 0-10 %, bevorzugt 6-10 % |

### Bestandteil a)

Als Epoxidharzdispersionen kommen allgemein bekannte wässrige Dispersionen von Bisphenol-A-diglycidylether, Bisphenol-F-diglycidylether, sowie deren höhere Homologe und Mischungen derselben in Frage. Es können sowohl flüssige Harze als auch Lösungen der Festharzkomponenten in organischen Lösungsmitteln z.B. Methoxypropylacetat eingesetzt werden. Zur Stabilisierung der in Wasser dispergierten Harzpartikel werden Emulgatoren eingesetzt. Bevorzugt kommen hier nichtionische Fettalkoholethoxylate zum Einsatz. Am besten haben sich Dispersionen von Festharzen erwiesen, bei denen das Harz ein Äquivalentgewicht von > 300g/mol EP (bezogen auf den Festkörper), bevorzugt 350 g/mol, aufweist (z.B. Polypox E 2500 / 60W, der Firma UPPC).

### Bestandteil b)

Als Aminhärter kommen Amin-Addukte, Polyaminaddukte, aliphatische Polyamine, Polyoxyalkylendiamine, Polyamidoamine, Mannich-Basen, die durch Kondensation von Phenol, einem Amin und Formaldehyd erzeugt wurden und /oder transaminierte Mannichbasen in Frage. Das Amin-H-Equivalentgewicht liegt zwischen 140 und 200 g/mol NH bezogen auf den Festkörper des Aminhärters. Am besten hierfür hat sich eine Dispersion eines Polyaminadduktes mit einem Festkörpergehalt von 55 % und einem NH-Äquivalentgewicht von 165 g/mol bezogen auf den Festkörperanteil (Epilink 701 der Firma Air Produkts Polymers) erwiesen.

### Wasser

Entweder ist die Epoxidharzdispersion die einzige Quelle für den Wasseranteil im Parkettfugenkittsystem oder der Wasseranteil stammt anteilig aus der Epoxidharzdispersion sowie aus dem Aminhärter, sofern wässrige Emulsionen eines Aminhärters zur Herstellung des Parkettfugenkitts eingesetzt werden, oder das Wasser wird der Formulierung zusätzlich zugesetzt.

### Bestandteil c)

Als Holzmehl wird das beim Mittelschliff (Körnung 60) der Parkettoberflächen erzeugte Schleifmehl verwendet.

### zusätzliche Bestandteile

Als Verdickungsmittel kommen Celluloseether, carboxylierte Celluloseether, Polyvinylalkohole, Polyacrylatverdicker und Polyurethanverdicker in Frage. Aufgrund der Strukturverwandtschaft zu den Cellulosefasern aus Holz werden bevorzugt Celluloseether eingesetzt (z.B. Walocel MW 40000).

Als wasserlösliche organische Lösungsmittel kommen Alkohole und Ketone mit einem Siedepunkt < 90°C in Frage; bevorzugt werden Ethanol, Aceton und/oder Isopropanol eingesetzt.

Für den Fachmann ist es selbstverständlich, dass die Bestandteile a) und b) zunächst getrennt bereit gehalten werden. Der Bestandteil c) wird durch Abschleifen des zu verkittenden Parketts gewonnen und kann entweder in a) oder b) oder zu einer Mischung aus a) und b) eingerührt oder anteilig in a) und b) eingerührt werden, abhängig vom Volumen der Bestandteile a) und b). Ebenso wie die Zumischung von Bestandteil c) erfolgt die Zumischung von zusätzlichen Bestandteilen wie die von Verdickern und wassermischbaren organischen Lösungsmitteln entweder zu a) oder b) oder zu einer Mischung aus a) und b) oder anteilig zu a) und b), abhängig vom Volumen der Bestandteile a) und b). Die Zumischung von Bestandteil c) kann vor oder nach der Zumischung der zusätzlichen Bestandteile oder gleichzeitig mit den zusätzlichen Bestandteilen erfolgen.

Die folgenden Beispiele dienen lediglich der Erläuterung der Erfindung und sollen diese in keiner Weise beschränken:

### Vergleichsbeispiel A

Es wird eine Fugenkittlösung unter Verwendung folgender Komponenten hergestellt.
Die Prozentangaben beziehen sich alle auf das Komponentengewicht (Gew.%):
40 % Polyacrylatdispersion (F.K.:50 %, Tg: ca. 0°C)
60 % Wasser
FK Gehalt: 20 %
Die Viskosität der Fugenkittlösung nach Brookfield 4/100 bei 23°C betrug ca. 1200 mPas.

In 100 Gew.% Fugenkittlösung werden 15 Gewichtsteile Holzschleifmehl, gewonnen durch Abschliff der Parkettoberfläche einem Schleifmittel der Körnung 60, eingerührt. Die so erzeugte Holzkittmasse wird zur Verspachtelung der abgeschliffenen Parkettoberfläche verwendet. Hierfür wird auf eine V 100 Spanplatte 8 mm Mosaikparkett Buche (Stabgröße 160 mm x 22 mm) so geklebt, dass Fugen mit bis zu 1 mm Breite vorhanden sind. Anschließend wird mittels einer Doppelblattspachtel die Fugenkittmasse auf die Oberfläche aufgespachtelt. Die Platte wird bei 23°C und 50 % rel. Luftfeuchte getrocknet und auf einem je 25 cm breiten Streifen nach 15, 30, 45 und 60 Minuten mit einem Schleifmittel der Körnung 60 abgeschliffen. Es wird zum einen visuell begutachtet, wie stark sich das benutzte Schleifmittel (z.B. Papier) durch nicht verfestigte Kittmasse zusetzt.
(Note 1 = keinerlei Rückstand auf dem Schleifpapier,
Note 6 = sehr starke, schmierige Rückstände auf dem Schleifpapier)
und zum anderen mittels einer Lupe begutachtet, wie gut die Fugen verfüllt wurden:

100 % Verfüllung = Fugenkittmasse schließt bündig mit der Parkettoberfläche ab
75 % Verfüllung = leicht konkaves Einsacken der Fuge;
50 % Verfüllung = stark konkaves Einsacken der Fuge;
25 % Verfüllung = starkes Wegsacken bzw. starke Rissbildung in der Fuge).

### Vergleichsbeispiel B

Es wird eine Fugenkittlösung unter Verwendung folgender Komponenten hergestellt.
Die Prozentangaben beziehen sich alle auf das Komponentengewicht (Gew.%):
13 % Nitrocellulose, (Stickstoffgehalt ca. 12 %, Höppler Viskosität bei 20°C einer 9 %igen Lösung von 400 mPas, Substitutionsgrad 2,2;)
86 % Aceton
1 % Diisobutylphthalat (Weichmacher)
FK Gehalt: 13%
Die Viskosität der Fugenkittlösung nach Brookfield 4/100 bei 23°C betrug ca. 900 mPas.

In 100 Gewichtsteile Fugenkittlösung werden 15 Gewichtsteile Holzschleifmehl, gewonnen durch Abschliff der Parkettoberfläche mit einem Schleifmittel der Körnung 60 als Füllmittel eingerührt. Die so erzeugte Holzkittmasse wird zur Verspachtelung der abgeschliffenen Parkettoberfläche verwendet. Hierfür wird auf eine V 100 Spanplatte ein 8 mm Mosaikparkett aus Buchenholz (Stabgröße 160 mm x 22 mm) so geklebt, dass Fugen mit bis zu 1 mm Breite entstehen. Anschließend wird mittels einer Doppelblattspachtel die Fugenkittmasse auf die Oberfläche aufgespachtelt. Die Platte wird bei 23°C und 50 % rel. Luftfeuchte getrocknet und auf einem je 25 cm breiten Streifen nach 15, 30, 45 und 60 Minuten mit einem Schleifmittel (Korn 60) abgeschliffen. Es wird zum einen visuell begutachtet, wie stark sich das hier benutzte Schleifpapier durch nicht verfestigte Kittmasse zusetzt und zum anderen mittels einer Lupe begutachtet, wie gut die Fugen verfüllt wurden

### BEISPIEL 1

Es wird eine Fugenkittlösung unter Verwendung folgender Komponenten hergestellt. Die Prozentangaben beziehen sich alle auf das Komponentengewicht (Gew.%):

| **Epoxidharzbestandteil einschließlich Zusatzbestandteile:** | |
|---|---|
| POLYPOX E 2500/60W | 17,4 % |
| Walocel MW 40000-Lösung 2,5% | 30,3 % |
| Wasser | 41,9% |
| Ethanol (Spiritus vergällt) | 10,4 % |
| | |

| **Amin-Härter:** | |
|---|---|
| Epilink 701 | 12,5% |

In 100 Gewichtsteile Fugenkittlösung, hergestellt durch intensives Mischen von 89 Gewichtsteilen des Epoxidharzbestandteils einschließlich Zusatzbestandteile und 11 Gewichtsteilen Amin-Härter, werden 15 Gewichtsteile Holzschleifmehl, gewonnen durch Abschliff der Parkettoberfläche mit einem Schleifmittel der Körnung 60, eingerührt. Die so erzeugte Holzkittmasse wird zur Verspachtelung der abgeschliffenen Parkettoberfläche verwendet. Hierfür wird auf eine V 100 Spanplatte 8 mm Mosaikparkett aus Buchenholz (Stabgröße 160 mm x 22 mm) so geklebt, dass Fugen mit bis zu 1 mm Breite entstehen. Anschließend wird mittels einer Doppelblattspachtel die Fugenkittmasse auf die Oberfläche aufgespachtelt. Die Platte wird bei 23°C und 50 % relativer Luftfeuchtigkeit getrocknet und auf einem je 25 cm breiten Streifen nach 15, 30, 45 und 60 Minuten mit einem Schleifmittel (Korn 60) abgeschliffen. Es wird zum einen visuell begutachtet, wie stark sich das hier benutzte Schleifpapier durch nicht verfestigte Kittmasse zusetzt und zum anderen mittels einer Lupe begutachtet, wie gut die Fugen verfüllt wurden

**TABELLE I**

| | Vergeichsbeispiel A | Vergleichsbeispiel B | Beispiel 1 |
|---|---|---|---|
| 15 min Trocknung | 25% | 75% | 75% |
| 30 min Trocknung | 25% | 100% | 100% |
| 45 min Trocknung | 50% | 100% | 100% |
| 60 min Trocknung | 75% | 100% | 100% |

Begutachtung der Fugenverfüllung nach Schliff mit Korn 60 nach verschiedenen Trockenzeiten.

**TABELLE II**

| | Vergleichseispiel A | Vergleichsbeispiel B | Beispiel 1 |
|---|---|---|---|
| 15 min Trocknung | 5 | 2 | 2 |
| 30 min Trocknung | 5 | 1 | 1 |
| 45 min Trocknung | 4 | 1 | 1 |
| 60 min Trocknung | 2 | 1 | 1 |

Begutachtung des benutzten Schleifpapiers nach Schliff mit Korn 60 nach verschiedenen Trockenzeiten

Wie aus den Tabellen I und II ersichtlich ist, belegen die Versuchsergebnisse, dass das Trocknungsverhalten des wasserbasierenden Epoxidharzfugenkitts signifikant günstiger ist, als das eines Dispersionsfugenkitts entsprechend dem Stand der Technik. Die Werte der Trocknungsgeschwindigkeit und Ausfüllung der Fugen liegen sogar im Bereich eines stark lösungsmittelhaltigen Produktes.

### Bestimmung der Festiqkeitsentwicklung:

Die wie oben beschrieben erzeugten Fugenkitte werden mittels einer Lackhantel der Spaltbreite 200 µm auf einer Glasplatte aufgetragen. Die Glasplatten werden bei 23°C und 50% Luftfeuchtigkeit trocknen gelassen. Im 5 Minuten-Abstand werden die Glasaufzüge mittels Pendelhärte nach König vermessen. Wie Tabelle III und Diagramm I zeigen, entspricht der Härtungsverlauf des Fugenkittsystems aus dem erfindungsgemäßen Beispiel 1 sehr stark dem des lösemittelhaltigen Vergleichsbeispiels B wohingegen das Vergleichsbeispiel des wässrigen Fugenkittsystems A einen signifikant langsameren Härtungsverlauf besitzt.

**TABELLE III**

| Pendelhärten | | | |
|---|---|---|---|
| (sec) | | | |
| | | | |

| Zeit (min) | Beispiel 1 | Vgl.-Bsp.A | Vgl.-Bsp.B |
|---|---|---|---|
| 0 | 12 | 14 | 17 |
| 5 | 15 | 18 | 20 |
| 10 | 21 | 20 | 30 |
| 15 | 24 | 20 | 36 |
| 20 | 36 | 20 | 40 |
| 25 | 38 | 20 | 44 |
| 30 | 41 | 21 | 46 |
| 35 | 42 | 21 | 47 |
| 40 | 43 | 22 | 48 |
| 45 | 44 | 23 | 49 |
| 50 | 45 | 24 | 50 |
| 55 | 46 | 25 | 50 |
| 60 | 47 | 25 | 51 |

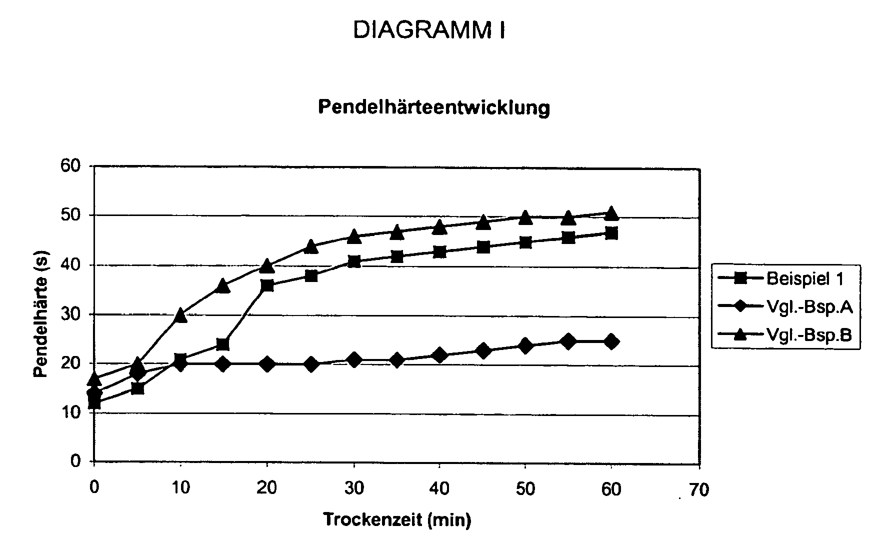

### Beurteilung der Farbänderung durch UV-Belichtung

8 mm Massivparkettelemente der jeweiligen Holzart wurden mit Nagellöchern (ca. 2 mm Durchmesser) versehen und anschließend mit Fugenkitt bestehend aus Originalschleifstaub und entsprechendem Kittsystem gefüllt.

Ein Teil wurde 72 Stunden unter einer Xenon-Lampe bestrahlt, der andere Teil verblieb 3 Monate hinter Fensterglas dem natürlichen Licht ausgesetzt.
Die Farbänderung der gekitteten Stellen wurde im Vergleich zu dem übrigen Holz visuell begutachtet und mit einem Bewertungssystem 0-5 bewertet.
0 keine Veränderung
1 schwache, nur kontrastierte Veränderung
2 deutlich erkennbare Veränderung hell / dunkel
3 farbliche Veränderung
4 starke farbliche Veränderung
5 extrem starke farbliche Veränderung

Wie aus den Ergebnissen der Tabelle IV und Tabelle V zu ersehen ist, zeigt das erfindungsgemäße Beispiel 1 ein ausgesprochen günstiges Verfärbungsverhalten nach Belichtung. Bei den 6 geprüften Holzarten zeigen sich bei Bestrahlung mit der Xenon-Lampe in keinem Fall farbliche Veränderungen, wohingegen bei dem dem Stand der Technik entsprechenden wässrigen Fugenkitt (Vgl. Bsp. A) bei 4 von 6 Holzarten farbliche Veränderungen auftreten. Auch bei der Belichtung unter natürlichen Verhältnissen zeigt das erfindungsgemäße Beispiel 1 ein signifikant besseres Verhalten: Alle 6 Holzarten zeigen entweder gar keine oder nur schwach kontrastierte Veränderungen, während das Vergleichsbeispiel A bereits deutlich erkennbare hell/dunkel Veränderungen in 3 von 6 Fällen zeigt.

**TABELLE IV (Belichtung 72 Stunden Xenon-Lampe)**

| | Europ. Kirsche | Kempas | Merbau | lpe | Cumaru | Jatoba |
|---|---|---|---|---|---|---|
| | | | | | | |
| Bsp. 1 | 1 | 0-1 | 1 | 2 | 2 | 0-1 |
| | | | | | | |
| VgLBsp. A | 2 | 3 | 1 | 3 | 4 | 2 |
| | | | | | | |
| Vgl.Bsp. B | 0-1 | 0-1 | 0 | 2 | 1-2 | 0 |
| | | | | | | |

**TABELLE V (Belichtung 3 Monate natürliches Licht hinter Fenster)**

| | Europ. Kirsche | Kempas | Merbau | lpe | Cumaru | Jatoba |
|---|---|---|---|---|---|---|
| | | | | | | |
| Bsp.1 | 0 | 0-1 | 0 | 0 | 1 | 0-1 |
| | | | | | | |
| Vgl.Bsp.A | 0 | 2 | 1 | 2 | 3 | 1 |
| | | | | | | |
| Vgl.Bsp.B | 2 | 0-1 | 0 | 0-1 | 1 | 0-1 |
| | | | | | | |

## Patentansprüche

1. Aus drei Bestandteilen zusammengesetztes Parkettfugenkittsystem, **gekennzeichnet durch** folgende Bestandteile
a) eine wässrige Epoxidharzdispersion
b) einen Amin-Härter, der bei Mischung von a) und b) ein Festkörperaddukt mit a) bildet und
c) ein Holzmehl.

2. Parkettfugenkittsystem gemäß Anspruch 1, **dadurch gekennzeichnet, dass** als Bestandteil a) wässrige Dispersionen von Bisphenol-A-Diglycidylether, Bisphenol-F-Diglycidylether sowie deren höheren Homologen und Mischungen aus diesen vorgesehen sind.

3. Parkettfugenkittsystem gemäß Anspruch 1 oder Anspruch 2, **dadurch gekennzeichnet, dass** der Festkörperanteil im Bestandteil a) bezogen auf den gesamten Parkettfugenkitt in dem Bereich von 5 bis 10 Gew.%, besonders bevorzugt in dem Bereich von 7 bis 9 Gew.%, liegt.

4. Parkettfugenkittsystem nach einem der Ansprüche 1 bis 3, **dadurch gekennzeichnet, dass** Bestandteil a) ein Epoxid-Äquivalentgewicht von >300g/mol bezogen auf den Festkörpergehalt des Epoxidharzes, besonders bevorzugt 350 g/mol, aufweist.

5. Parkettfugenkittsystem nach einem der Ansprüche 1 bis 4, **dadurch gekennzeichnet, dass** als Bestandteil b) Amin-Addukte, Polyaminaddukte, aliphatische Polyamine, Polyoxyalkylendiamine, Polyamidoamine, durch Kondensation von Phenol, einem Amin und Formaldehyd erzeugte Mannich-Basen und/oder transaminierte Mannichbasen, insbesondere wässrige Dispersionen dieser Verbindungen sowie Mischungen aus diesen vorgesehen sind.

6. Parkettfugenkittsystem nach einem der Ansprüche 1 bis 5, **dadurch gekennzeichnet, dass** der Festkörperanteil im Bestandteil b) bezogen auf den gesamten Parkettfugenkitt in dem Bereich von 4 bis 7 Gew.%, besonders bevorzugt in dem Bereich von 5 bis 6 Gew.%, liegt.

7. Parkettfugenkittsystem nach einem der Ansprüche 1 bis 6, **dadurch gekennzeichnet, dass** Bestandteil b) ein Amin-H-Äquivalentgewicht zwischen 140 und 200 g/mol bezogen auf den Festkörpergehalt des Amin-Epoxid-Härters, besonders bevorzugt 165 g/mol, aufweist.

8. Parkettfugenkittsystem nach einem der Ansprüche 1 bis 7, **dadurch gekennzeichnet, dass** der Anteil an Bestandteil c) in dem Parkettfugenkittsystem in dem Bereich von 9 bis 14 Gew.%, besonders bevorzugt in dem Bereich von 10,5 bis 12,5 Gew.%, liegt.

9. Parkettfugenkittsystem nach einem der Ansprüche 1 bis 8, **dadurch gekennzeichnet, dass** der Bestandteil c) das Schleifmehl des zu verkittenden Parketts ist.

10. Parkettfugenkittsystem nach einem der Ansprüche 1 bis 9, **dadurch gekennzeichnet, dass** das Parkettfugenkittsystem als zusätzlichen Bestandteil mit Wasser mischbare organische Lösungsmittel aus der Familie der Alkohole und Ketone mit einem Siedepunkt < 90°C enthält, bevorzugt Ethanol, Aceton, Isopropanol und Mischungen aus diesen.

11. Parkettfugenkittsystem nach Anspruch 10, **dadurch gekennzeichnet, dass** der Anteil an wasserlöslichen organischen Lösungsmitteln in dem Parkettfugenkittsystem in dem Bereich von 0 bis 10 Gew.%, besonders bevorzugt in dem Bereich von 6 bis 10 Gew.%, liegt.

12. Parkettfugenkittsystem nach einem der Ansprüche 1 bis 11, **dadurch gekennzeichnet, dass** das Parkettfugenkittsystem als zusätzlichen Bestandteil organische Verdickungsmittel, insbesondere organische Celluloseether, Polyvinylalkohole, Polyacrylatverdicker und Polyurethanverdicker sowie anorganische Verdickungsmittel, insbesondere pyrogene Kieselsäure und Mischungen aus diesen enthält.

13. Parkettfugenkittsystem nach Anspruch 12, **dadurch gekennzeichnet, dass** der Anteil an Verdickungsmittel in dem Parkettfugenkittsystem in dem Bereich von 0,1 bis 1 Gew.%, besonders bevorzugt in dem Bereich von 0,4 bis 0,8 Gew.%, liegt.

14. Parkettfugenkittsystem nach einem der Ansprüche 1 bis 13, **dadurch gekennzeichnet, dass** der Wasseranteil in dem Parkettfugenkittsystem in dem Bereich von 60 bis 70 Gew.%, besonders bevorzugt in dem Bereich von 64 bis 68 Gew.%, liegt.

15. Verfahren zur Herstellung eines Parkettfugenkitts gemäß einem der Ansprüche 1 bis 14, **dadurch gekennzeichnet, dass**
a) eine wässrige Epoxidharzdispersion und
b) ein Amin-Härter, der bei Mischung von a) und b) ein Festkörperaddukt mit a) bildet und
c) ein Holzmehl
in beliebiger Reihenfolge bis zur Homogenität gemischt werden.

16. Verfahren zur Herstellung eines Parkettfugenkitts nach Anspruch 15, **dadurch gekennzeichnet, dass** die zusätzlichen Bestandteile entweder dem Bestandteil a) oder dem Bestandteil b) beigemischt werden oder einer Mischung aus a) und b).

17. Verwendung eines Parkettfugenkitts, hergestellt nach einem der Ansprüche 15 oder 16, zum Auffüllen von Parkettfugen.

## Claims

1. Parquet joint cement system made up of three components, **characterised by** the following components
a) an aqueous epoxy resin dispersion
b) an amine hardener that forms a solid adduct with a) upon mixture of a) and b) and
c) a wood flour.

2. Parquet joint cement system according to claim 1, **characterised in that** aqueous dispersions of bisphenol A diglycidyl ether, bisphenol F diglycidyl ether and their higher homologies and mixtures of these are intended as component a).

3. Parquet joint cement system according to claim 1 or claim 2, **characterised in that** the solids content in component a) with regard to the entire parquet joint cement is in the range of 5 to 10 wt. %, preferably specifically in the range of 7 to 9 wt. %.

4. Parquet joint cement system according to one of claims 1 to 3, **characterised in that** component a) has an equivalent epoxy weight of >300 g/mol with regard to the solids content of the epoxy resin, preferably specifically 350 g/mol.

5. Parquet joint cement system according to one of claims 1 to 4, **characterised in that** amine adducts, polyamine adducts, aliphatic polyamines, polyoxyalkylenediamines, polyamidoamines, Mannich bases created through the condensation of phenol, an amine and formaldehyde and/or transaminated Mannich bases, in particular aqueous dispersions of these compounds as well as mixtures of these are intended as component b).

6. Parquet joint cement system according to one of claims 1 to 5, **characterised in that** the solids content in component b) with regard to the entire parquet joint cement is in the range of 4 to 7 wt. %, preferably specifically in the range of 5 to 6 wt. %.

7. Parquet joint cement system according to one of claims 1 to 6, **characterised in that** component b) has an equivalent amine hardener weight between 140 and 200 g/mol with regard to the solids content of the amine epoxy hardener, preferably specifically 165 g/mol.

8. Parquet joint cement system according to one of claims 1 to 7, **characterised in that** the content of component c) in the parquet joint cement system is in the range of 9 to 14 wt. %, preferably specifically in the range of 10.5 to 12.5 wt. %.

9. Parquet joint cement system according to one of claims 1 to 8, **characterised in that** component c) is the sanding flour of the parquet to be cemented.

10. Parquet joint cement system according to one of claims 1 to 9, **characterised in that** the parquet joint cement system contains as an additional component organic solvents mixable with water from the family of alcohols and ketones with a boiling point < 90 °C, preferably ethanol, acetone, isopropanol and mixtures of these.

11. Parquet joint cement system according to claim 10, **characterised in that** the content of water-soluble organic solvents in the parquet joint cement system is in the range of 0 to 10 wt. %, preferably specifically in the range of 6 to 10 wt. %.

12. Parquet joint cement system according to one of claims 1 to 11, **characterised in that** the parquet joint cement system contains as an additional component organic thickening agents, particularly organic cellulose ether, polyvinyl alcohols, polyacrylate thickener and polyurethane thickener as well as inorganic thickening agents, particularly pyrogenic silicic acid and mixtures of these.

13. Parquet joint cement system according to claim 12, **characterised in that** the content of thickening agents in the parquet joint cement system is in the range of 0.1 to 1 wt. %, preferably specifically in the range of 0.4 to 0.8 wt. %.

14. Parquet joint cement system according to one of claims 1 to 13, **characterised in that** the water content in the parquet joint cement system is in the range of 60 to 70 wt. %, preferably specifically in the range of 64 to 68 wt. %.

15. Method for producing a parquet joint cement according to one of claims 1 to 14, **characterised in that**
a) an aqueous epoxy resin dispersion and
b) an amine hardener that forms a solid adduct with a) upon mixture of a) and b) and
c) a wood flour
are mixed in any order until homogeneity is achieved.

16. Method for producing a parquet joint cement according to claim 15, **characterised in that** the additional components are mixed either with component a) or component b) or with a mixture of a) and b).

17. Use of a parquet joint cement, produced according to claims 15 or 16, for filling parquet joints.

## Revendications

1. Système d'enduit de jointoiement pour parquet fait de trois composants, **caractérisé par** les composants suivants :
a) une résine époxy en dispersion aqueuse
b) un durcisseur amine qui, lors du mélange de a) et b), forme un produit d'addition solide avec a) et
c) une farine de bois

2. Système d'enduit de jointoiement pour parquet selon la revendication 1, **caractérisé en ce que** des dispersions aqueuses de diglycidyléther de bisphénol A, de diglycidyléther de bisphénol F ainsi que de leurs homologues plus élevés et des mélanges de ceux-ci sont prévus comme composant a).

3. Système d'enduit de jointoiement pour parquet selon la revendication 1 ou selon la revendication 2, **caractérisé en ce que** la teneur en substances solides dans le composant a) calculée sur l'ensemble de l'enduit de jointoiement pour parquet se situe dans la plage de 5 à 10 % en poids, la plage de 7 à 9 % en poids étant particulièrement préférée.

4. Système d'enduit de jointoiement pour parquet selon l'une quelconque des revendications 1 à 3, **caractérisé en ce que** le composant a) présente un poids équivalent de résine époxy >300 g/mol calculé sur l'extrait sec de la résine époxy, un poids équivalent de 350 g/mol étant particulièrement préféré.

5. Système d'enduit de jointoiement pour parquet selon l'une quelconque des revendications 1 à 4, **caractérisé en ce que** des adduits amines, des adduits polyamines, des polyamines aliphatiques, des polyoxyalkylènediamines, des polyamidoamines, des bases mannich générées par la condensation de phénol, d'un amine et de formaldéhyde et/ou des bases mannich transaminées, en particulier des dispersions aqueuses de ces combinaisons ainsi que des mélanges de celles-ci sont prévus comme composant b).

6. Système d'enduit de jointoiement pour parquet selon l'une quelconque des revendications 1 à 5, **caractérisé en ce que** la teneur en substances solides dans le composant b) calculée sur l'ensemble de l'enduit de jointoiement pour parquet se situe dans la plage de 4 à 7 % en poids, la plage de 5 à 6 % en poids étant particulièrement préférée.

7. Système d'enduit de jointoiement pour parquet selon l'une quelconque des revendications 1 à 6, **caractérisé en ce que** le composant b) présente un poids équivalent d'amine H situé entre 140 et 200 g/mol calculé sur l'extrait sec du durcisseur époxy-amine, un poids équivalent de 165 g/mol étant particulièrement préféré.

8. Système d'enduit de jointoiement pour parquet selon l'une quelconque des revendications 1 à 7, **caractérisé en ce que** la teneur en composant c) dans le système d'enduit de jointoiement pour parquet se situe dans la plage de 9 à 14 % en poids, la plage de 10,5 à 12,5 % en poids étant particulièrement préférée.

9. Système d'enduit de jointoiement pour parquet selon l'une quelconque des revendications 1 à 8, **caractérisé en ce que** le composant c) est la poussière de ponçage du parquet à jointoyer.

10. Système d'enduit de jointoiement pour parquet selon l'une quelconque des revendications 1 à 9, **caractérisé en ce que** le système d'enduit de jointoiement pour parquet contient en tant que composant supplémentaire des solvants organiques miscibles à l'eau de la famille des alcools et des cétones présentant un point d'ébullition < 90 °C, de préférence de l'éthanol, de l'acétone, de l'isopropanol et des mélanges de ceux-ci.

11. Système d'enduit de jointoiement pour parquet selon la revendication 10, **caractérisé en ce que** la teneur en solvants organiques solubles dans l'eau dans le système d'enduit de jointoiement pour parquet se situe dans la plage de 0 à 10 % en poids, la plage de 6 à 10 % en poids étant particulièrement préférée.

12. Système d'enduit de jointoiement pour parquet selon l'une quelconque des revendications 1 à 11, **caractérisé en ce que** le système d'enduit de jointoiement pour parquet contient en tant que composant supplémentaire des épaississants organiques, en particulier des éthers de cellulose, alcools polyvinyliques, épaississants polyacryliques et épaississants polyuréthaniques organiques ainsi que des épaississants anorganiques, en particulier de l'acide silique pyrogéné et des mélanges de ceux-ci.

13. Système d'enduit de jointoiement pour parquet selon la revendication 12, **caractérisé en ce que** la teneur en épaississants dans le système d'enduit de jointoiement pour parquet se situe dans la plage de 0,1 à 1 % en poids, la plage de 0,4 à 0,8 % en poids étant particulièrement préférée.

14. Système d'enduit de jointoiement pour parquet selon l'une quelconque des revendications 1 à 13, **caractérisé en ce que** la teneur en eau dans le système d'enduit de jointoiement pour parquet se situe dans la plage de 60 à 70 % en poids, la plage de 64 à 68 % en poids étant particulièrement préférée.

15. Procédé de fabrication d'un système d'enduit de jointoiement pour parquet selon l'une quelconque des revendications 1 à 14, **caractérisé en ce que**
a) une résine époxy en dispersion aqueuse et
b) un durcisseur amine qui, lors du mélange de a) et b), forme un produit d'addition solide avec a) et
c) une farine de bois
sont mélangés dans un ordre quelconque jusqu'à homogénéité.

16. Procédé de fabrication d'un système d'enduit de jointoiement pour parquet selon la revendication 15, **caractérisé en ce que** les composants supplémentaires sont ajoutés soit au composant a) ou au composant b) ou à un mélange de a) et b).

17. Utilisation d'un enduit de jointoiement pour parquet, fabriqué selon l'une quelconque des revendications 15 ou 16, pour le remplissage des joints de parquet.
